# EUROPEAN PATENT APPLICATION

(11) **EP 4 650 225 A1**
(43) Date of publication of application: **19.11.2025**
(21) Application number: 23916127.6
(22) Date of filing: 02.11.2023
(51) Int. Cl.: B60R 13/02, B32B 27/00, H05K 9/00

(54) **VEHICLE BODY STRUCTURE**

(30) Priority: 10.01.2023 JP 2023001549; 25.08.2023 JP 2023136943
(71) Applicant: TOYOTA BOSHOKU KABUSHIKI KAISHA, Kariya-shi, Aichi 448-8651 (JP)
(72) Inventor: TAKAGI Tsutomu, Kariya-shi, Aichi 448-8651 (JP); SAKOH Mitsutaka, Kariya-shi, Aichi 448-8651 (JP); NAKANISHI Toshiaki, Kariya-shi, Aichi 448-8651 (JP)
(74) Representative: TBK
(86) International application number: PCT/JP2023/039573
(87) International publication number: WO 2024/150509

(57) **Abstract**

A vehicular body structure includes a body panel 12 and an interior component 14. The interior component 14 includes a base member 30, a skin layer 32 that is disposed on a vehicular interior side of the base member 30 and configured as a design surface of a vehicular compartment, and an infrared reflection layer 38 that is configured as a most vehicular exterior side layer of the interior component 14 and for reflecting infrared radiation entering from a body panel 12 side. The base member 30, the skin layer 32, and the infrared reflection layer 38 are disposed on top of each other in layers. The base member 30 is made of thermosetting resin material. The infrared reflection layer 38 includes scary metal flakes 40 that are electrically conductive and non-electrically conductive resin 42 that holds the scary metal flakes 40 to be parallel to each other and to be overlapped in a thickness direction. The interior component 14 is mounted on the body panel 12 with a portion of the infrared reflection layer 38 being in contact with the body panel 12. Accordingly, a vehicular body structure that has an infrared reflecting function and effectively suppresses influence of electromagnetic noise and static electricity is provided.

## Description

### TECHNICAL FIELD

The present technology relates to a vehicular body structure.

### BACKGROUND ART

A vehicular interior component that suppresses increase of temperature in a vehicular compartment is described in Patent Documents 1 and 2 described below. The vehicular interior component described in each of Patent Document 1 and 2 includes a base member, a skin layer disposed on a design surface side of the base member, and a layer disposed on a back surface side of the base member and having an infrared reflecting function. Specifically, Patent Document 1 describes that a rear surface layer having the infrared reflecting function includes a base layer and an infrared reflection layer. The base layer is an impermeable film made of synthetic resin and has a thickness of 0.8 to 25 µm. The infrared reflection layer is an aluminum vapor deposition film deposited on the vehicular body panel side of the base layer. Patent Document 2 describes a radiant heat reflecting film that can be used as the layer having the infrared reflecting function. The radiant heat reflecting film includes scaly metal flakes positioned substantially parallel to each other and resin for preventing contact between the scaly metal flakes.

### PRIOR ART DOCUMENT

### PATENT DOCUMENTS

[Patent Document 1] Japanese Patent Publication No. 5628881
[Patent Document 1] Japanese Translation of PCT International Application Publication No. 2019/225487

### SUMMARY OF THE PRESENT INVENTION

### Problem to be Solved by the Invention

Electromagnetic noise may be caused in a vehicle while the vehicle is moving and a vehicle may receive electromagnetic noise or static electricity from the outside. A condenser or a ferrite core may be disposed near a cable or an electric component such that the vehicle receives less influence from the electromagnetic noise or static electricity. While the present applicant who is also the applicant of Patent Document 2 has been working on the interior component having the infrared (radiant heat) reflecting function described in Patent Document 2, the present applicant found that the vehicle receives less influence of the electromagnetic noise or static electricity with using the interior component having the infrared reflecting function.

An object of the present technology is to provide a vehicular body structure that has an infrared reflecting function and effectively suppresses influence of electromagnetic noise and static electricity on a vehicle.

### Means for Solving the Problem

To solve the above problem, a vehicular body structure disclosed herein includes a body panel, and
an interior component disposed to cover a vehicular interior side of the body panel, the interior component including a base member made of thermosetting resin material, a skin layer disposed on the vehicular interior side of the base member and configured as a design surface of a vehicular compartment, and an infrared reflection layer disposed on a vehicular exterior side of the base member to be opposite the body panel. The infrared reflection layer is for reflecting infrared radiation entering from a body panel side. The base member, the skin layer, and the infrared reflection layer are disposed on top of each other in layers.
The infrared reflection layer includes scary metal pieces that are electrically conductive and non-conductive resin that holds the scary metal pieces to be parallel to each other and to be overlapped in a thickness direction,
   the interior component is mounted on the body panel with a portion of the infrared reflection layer being in contact with the body panel.

If the surface of the body and the air around the body are charged with a same polarity while the vehicle being moving, repulsion (a repulsion force) is caused between the body and the air and disturbance may occur in the air flow near the surface of the body such that the air flows away from the surface of the body. Due to such separation of the air flow during the vehicle's moving, desired characteristics of aerodynamics may not be obtained and driving stability and driving performance may be lowered.

In the vehicular body structure according to this disclosure, in the infrared reflection layer, two scary metal pieces that are arranged parallel to each other are held to be away from each other with the non-conductive resin. Accordingly, a structure similar to that of a condenser is obtained. Namely, charges are temporally stored in the infrared reflection layer. In the vehicular body structure according to this disclosure, the almost whole infrared reflection layer of the interior component functions as a condenser. In the vehicular body structure of this disclosure, a portion of the infrared reflection layer is contacted with the body panel. Therefore, the infrared reflection layer can store negative charges or positive charges via the body panel. The stored charges are concentrated on an edge portion of each scary metal piece and self-discharge (corona discharge) is caused. Ions created by the self-discharge attract ions of an opposite polarity and neutralization is caused. With the vehicular body structure of this disclosure, the body is less likely to be charged and the air flow during the vehicle's moving is stabilized and driving stability is improved. Fuel efficiency is also improved. In the vehicular body structure of this disclosure, "the body panel" is not necessarily limited to be made of metal but may be a panel member made of resin, carbon, and glass. For instance, the polarity of charges during the vehicle's moving may be positive or negative according to the material of the body panel.

There is an interior component that includes a base member molded with thermoplastic resin and an infrared reflection layer disposed thereon. Compared to a vehicular body structure including such an interior component, it is found that the increase rate of the fuel consumption is improved in the vehicular body structure of this disclosure. The interior component including the base member molded with thermoplastic resin is generally obtained by heating at least the base member and the infrared reflection layer at a relatively high temperature to soften the thermoplastic resin and thereafter performing cold pressing to be molded in a predefined shape. On the other hand, with the interior component used in the vehicular body structure of this disclosure including the base member made of thermosetting resin, the base member can be pressed with heating at a temperature lower than the temperature at which the thermoplastic resin is softened and molded into a predefined shape. In the vehicular body structure including the base member made of thermoplastic resin, the interior component is molded with heating the thermoplastic resin at a relatively high temperature and performing cold pressing. It is assumed that such a molding method is one of reasons of reduction of the condenser function of the infrared reflection layer.

In the above configuration, the interior component may include an infrared reflection film including a base film and the infrared reflection layer that is formed by disposing coating material including the scary metal pieces and the non-electrically conductive resin on the base film, and the infrared reflection film may be bonded to a vehicular exterior side surface of the base member.

In the vehicular body structure of this disclosure, the infrared reflection layer is formed on the base film with printing. According to the vehicular body structure having such a configuration, a forming area of the infrared reflection layer and a weight per a unit area of the infrared reflection layer can be changed easily. For instance, like a configuration described later, with an electric component for transmitting and receiving electromagnetic waves with the vehicular compartment being disposed on a back surface side of the interior component, the weight per a unit area of the infrared reflection layer may be reduced compared to other portion or the infrared reflection layer may not be formed to surely perform the transmission and receiving of the electromagnetic waves.

In the above configuration, the infrared reflection film may be bonded to the base member with thermosetting resin adhesive.

With the thermoplastic resin being included in the base member, thermoplastic resin may be used as a binder for bonding the infrared reflection film. In the vehicular body structure of the above configuration, the bonding strength of the infrared film and the base member can be increased compared to the configuration including thermoplastic resin as the binder.

In the above configuration, the interior component may include an adhesive layer between the base member and the infrared reflection film, and the adhesive layer may include the thermosetting resin adhesive and glass fibers that are mixed.

In the vehicular body structure having such a configuration, the adhesive layer includes glass fibers formed in a mat shape. Therefore, rigidity of the interior component is increased and the handling of the interior component for an operator is easy when mounting the interior component on the body panel.

In the above configuration, the interior component may include an adhesive layer between the base member and the skin layer, and the adhesive layer may include the thermosetting resin adhesive and glass fibers that are mixed.

In the vehicular body structure having such a configuration, the base member is between the adhesive layers that include glass fibers formed in a mat shape. Therefore, rigidity of the interior component is further increased.

In the above configuration, the vehicular body structure may further include an electric component that is disposed between the body panel and the interior component and configured to transmit or receive electromagnetic waves. The interior component may include an infrared reflection layer hole in a portion overlapping the electric component in a vehicular interior-exterior direction, and the infrared reflection layer is not formed in the infrared reflection layer hole.

In the vehicular body structure having such a configuration, the electric component transmits and receives electromagnetic waves via the infrared reflection layer hole and the transmission and receiving of the electromagnetic waves can be surely performed.

In the above configuration, the base member may be made of thermosetting resin material.

In the above configuration, the body panel may be a roof panel and the interior component may be a ceiling member.

In the above configuration, the base member may be urethane foam. Advantageous Effect of the Invention

According to the present technology, a vehicular body structure that has an infrared reflecting function and effectively suppresses influence of electromagnetic noise and static electricity on a vehicle is provided.

### BRIEF DESCRIPTION OF THE DRAWINGS

[FIG. 1] a front view illustrating a vehicle including a vehicular body structure of the present embodiment
[FIG. 2] a plan view of a roof trim illustrated in FIG. 1
[FIG. 3] a cross-sectional view illustrating a layered structure of the room trim
[FIG. 4] a schematic view of an infrared reflection layer
[FIG. 5] a view illustrating an air flow near a body of a vehicle that does not include the infrared reflection layer
[FIG. 6] a view illustrating an air flow near a body of a vehicle that has the vehicular body structure of the present embodiment
[FIG. 7] a schematic view of a charged voltage measuring device
[FIG. 8] graphs illustrating measurement results of change of charged voltage measured with using the charged voltage measuring device illustrated in FIG. 7 with respect to an interior component of Example and an interior component of Comparative Example
[FIG. 9] a cross-sectional view illustrating a layered structure of an interior component of Comparative Example
[FIG. 10] a table illustrating fuel consumption improvement rates of a vehicle having the vehicular body structure of the present embodiment and a vehicle including a roof trim having a layered structure illustrated in FIG. 9

### MODES FOR CARRYING OUT THE INVENTION

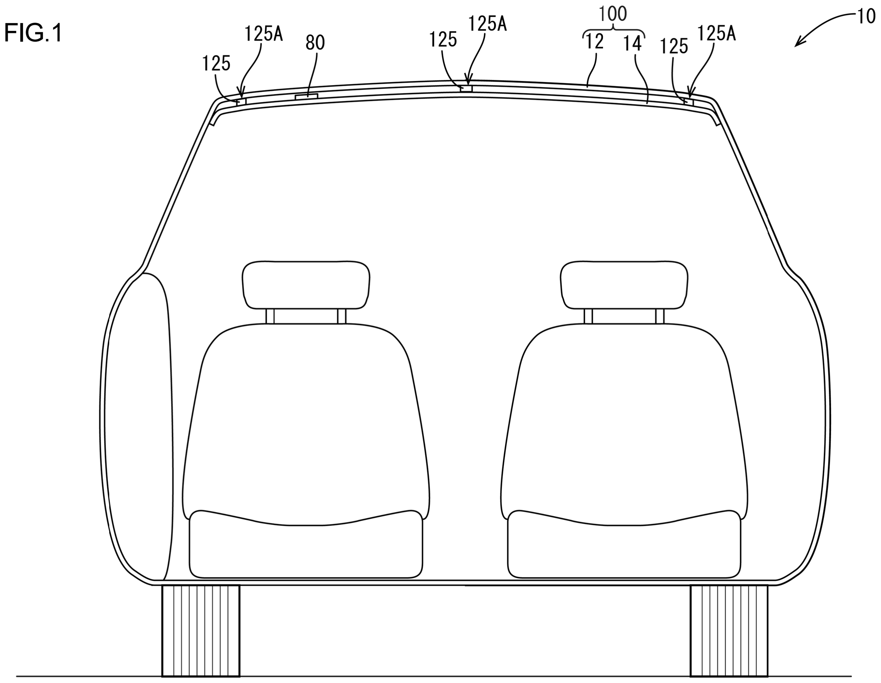

A vehicle 10 including a vehicular body structure 100 of this embodiment will be described with reference to FIGS. 1 to 10. More in detail, as illustrated in FIG. 1, the vehicular body structure 100 of this embodiment is applied to a ceiling of the vehicle 10 and includes a roof panel 12 that is a body panel made of metal and a roof trim 14 that is an interior component covering a vehicular interior side surface of the roof panel 12.

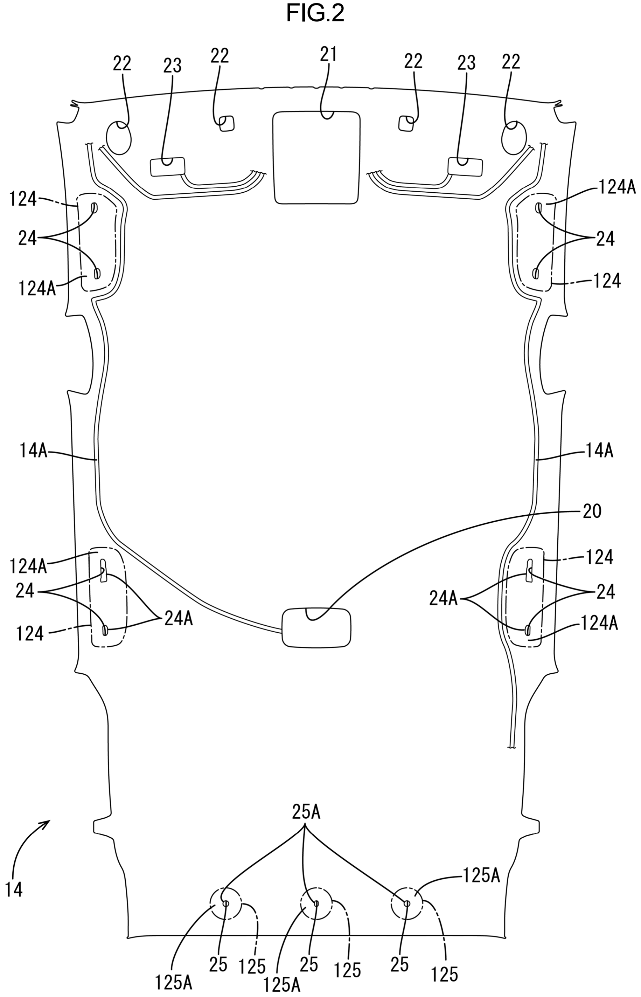

As illustrated in FIG. 2, the roof trim 14 has substantially a flat plate shape. The roof trim 14 includes a hole 20 for mounting a room lamp, a hole 21 for mounting a map lamp, holes 22 for mounting a sun visor, holes 23 for mounting vanity lamps, and holes 24 for mounting an assist grip. The roof trim 14 includes insertion holes 25 in a rear end portion. Fixing members for fixing the roof trim 14 to the roof panel 12 are inserted through the insertion holes 25. As illustrated in FIG. 2, the roof trim 14 includes hole base portions 124 and insertion hole base portions 125 that projecting from a vehicular exterior side surface of the roof trim 14. The hole base portion 124 has the hole 24 in a projecting end surface 124A. The insertion hole base portion 125 has the insertion hole 25 in a projecting end surface 125A of the insertion hole base portion 125. Furthermore, a hole edge 24A of the hole 24 and a hole edge 25A of the insertion hole 25 may project further toward a vehicular exterior side than the projecting end surfaces 124A, 125A, respectively.

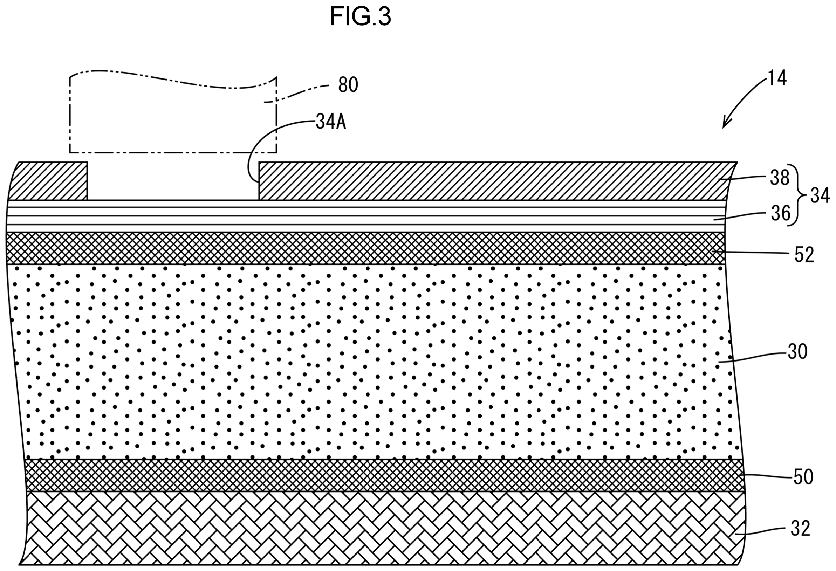

Most portion of the roof trim 14 has a layered structure illustrated in FIG. 3 and includes a base member 30, a skin 32 bonded to a vehicular interior side surface (a lower surface) of the base member 30, and an infrared reflection film 34 bonded to a vehicular exterior side surface (an upper surface) of the base member 30. The base member 30 is a main body of the roof trim 14 and is molded with thermosetting resin. In this embodiment, the base member 30 is semi-rigid polyurethane foam (polyurethane foam). The skin of the interior component that has been used can be used for the skin 32 (a skin layer) and for instance, a synthetic resin sheet having an embossed pattern or processed with laser, knitted fabric, woven fabric, non-woven fabric, and laminated ones can be used.

The infrared reflection film 34 is for reflecting radiant heat from the roof panel 12 such that the temperature in a vehicular compartment is less likely to increase. The infrared reflection film 34 includes a base film 36 and an infrared reflection layer 38 disposed on the base film 36. The infrared reflection layer 38 has an infrared reflecting function. The base film 36 is made of thermoplastic resin. Examples of the thermoplastic resin include polyester resin such as polyethylene terephthalate and polybutylene terephthalate; polyamide resin such as nylon 6, nylon 66, and a ternary copolymer of nylon 6 and nylon 66; polyolefin resin such as polyethylene and polypropylene; cyclic polyolefin resin; cellulose resin such as triacetylcellulose; polyimide resin; polycarbonate resin; acrylic resin; polyvinyl alcohol resin; and ethylene vinyl alcohol copolymer.

The resin used for the base film 36 is preferably not to be molten when being heated to be molded into the roof trim 14. Examples of such resin include amide resin such as nylon 6, nylon 66, nylon 6/10, nylon 11, and nylon 12 and a copolymer of such resin, and polyester resin such as polyethylene terephthalate and polybutylene terephthalate.
The base film 36 may be a stretched film or a non-stretched film. A non-stretched film has heat resistance and flexibility and is less likely to be torn when being molded into the roof trim 14. Therefore, a non-stretched film is effectively used. In this respect, the base film 36 of this embodiment is a non-stretched nylon film. A non-stretched polypropylene film may be preferably used for the base film 36.

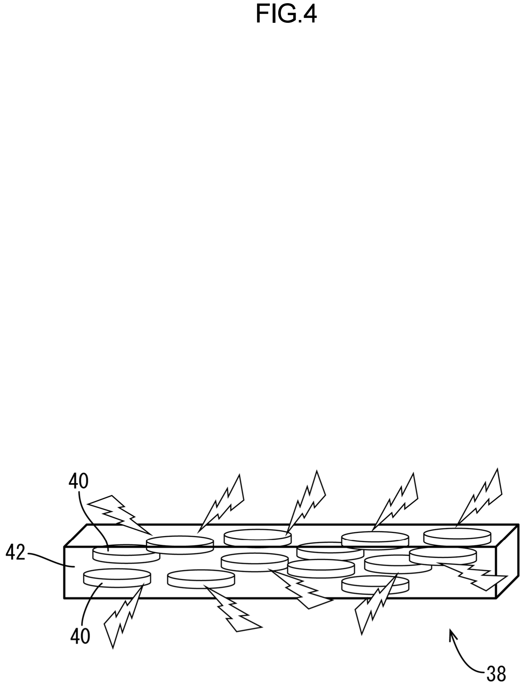

The infrared reflection layer 38 is formed by disposing coating material containing scaly metal flakes on the base film 36. Namely, the infrared reflection layer 38 is formed with printing. As schematically illustrated in FIG. 4, the infrared reflection layer 38 includes scaly metal flakes 40 (scaly metal pieces) and a resin layer 42 that holds the scaly metal flakes 40 in a scattered state. The scaly metal flakes 40 are held by the resin layer 42 to be parallel to each other and disposed to overlap in a thickness direction.

The coating material containing scaly metal flakes includes metal flake pigments such as aluminum, gold, silver, indium, and copper and resin configured as the resin layer 42. In this embodiment, leafing aluminum flake pigments are used as the metal flake pigments. The scaly metal flakes 40 contained in the metal flake pigments are obtained by coating scaly aluminum powders each having a longer diameter from 1 µm to 150 µm with processing agents such as stearic acid. With the base film 36 being coated with the coating material containing scaly metal flakes that includes the metal flake pigments and the resin configured as the resin layer 42, the scary metal flakes 40 move to the coating film surface and are arranged to be parallel to each other and are held by the resin layer 42 so as to overlap with being parallel to each other. Thus, the infrared reflection layer 38 is formed.

The resin of the resin layer 42 included in the coating material containing scaly metal flakes is non-electrically conductive resin (may be referred to as non-conductive resin hereinafter). Examples of such non-conductive resin include alkyd resin, acrylic resin, epoxy resin, olefin resin, polyamide resin, polyurethane resin, polyester resin, polybutadiene resin, and modified resin of the above resins. In this embodiment, the resin of the resin layer 42 is polyurethane resin.

The content of the scary metal flakes 40 in the infrared reflection layer 38 is preferably from 0.1 g/m² to 5.0 g/m², inclusive. If the content of the scary metal flakes 40 is less than 0.1 g/m², the infrared reflecting function is not effectively exerted. If the content of the scary metal flakes 40 is greater than 5.0 g/m², the infrared reflection effects are excessively exerted and a cost may increase. The content of the scary metal flakes 40 is more preferably from 0.3 g/m² to 3.0 g/m², inclusive and much more preferably from 0.5 g/m² to 1.0 g/m², inclusive.

Curing agent is preferably added to the coating material containing scaly metal flakes. Specifically, it is particularly preferable to add the curing agent of isocyanate compound to the non-conductive resin that is polyurethane resin of the resin layer 42. With using such a combination, resin of the obtained coating film has a crosslink structure and heat resistance of the coating film is improved. Therefore, even with heating and pressing is performed in the process of molding into the roof trim 14, the coating film is less likely to be removed.

With the infrared reflection film 34 reflecting radiant heat from the roof panel 12, the temperature in the vehicular compartment is less likely to increase. Specifically, the infrared reflection film 34 has high infrared reflectance in the wavelength range from 2 µm to 20 µm that includes the infrared wavelength range corresponding to the wavelength range of the radiant heat. The radiant heat is effectively reflected by the infrared reflection film 34.

The skin 32 and the infrared reflection film 34 are bonded to the base member 30. Namely, as illustrated in FIG. 3, the roof trim 14 includes an adhesive layer 50 between the skin 32 and the base member 30 and an adhesive layer 52 between the base member 30 and the infrared reflection film 34. The adhesive layers 50, 52 include thermosetting resin adhesive and fiber material. Specifically, the adhesive layers 50, 52 include methylene diphenyl diisocyanate (MDI) as the thermosetting resin adhesive and glass fibers. MDI is immersed in a glass mat made of glass fibers. As previously described, the roof trim 14 is configured such that the base member 30 is between the adhesive layers 50, 52 that include glass mats. Therefore, rigidity of the roof trim 14 is increased. Accordingly, the handling of the roof trim 14 for an operator is easy when mounting the roof trim 14 on the roof panel 12.

As previously described, the infrared reflection layer 38 of the infrared reflection film 34 is a most vehicular exterior side layer (an upper layer) of the roof trim 14 and the roof trim 14 is disposed such that the infrared reflection layer 38 is opposite the roof panel 12. With the roof trim 14 being mounted on the roof panel 12, the infrared reflection layer 38 is contacted with the roof panel 12 in portions near the holes 22 for mounting the sun visor, the hole base portions 124 having the holes 24 for mounting the assist grip, and the insertion hole base portion 125 having the insertion hole 25 (schematically illustrated in FIG. 1). In this embodiment, hole base portions having the holes 22 are not illustrated. In the roof trim 14, the projecting end surface 124A of the hole base portion 124 and the projecting end surface 125A of the insertion hole base portion 125 are contacted with the roof panel 12 (refer to FIG. 1). Namely, the infrared reflection layer 38 of the projecting end surfaces 124A, 125A are contacted with the roof panel 12. In the configuration in which the hole edge 24A and the hole edge 25A project, the hole edge 24A and the hole edge 25A are contacted with the roof panel 12. There has been an interior component that includes a metal film of a predefined thickness as the infrared reflection layer. Such a metal film is formed from metal such as aluminum with evaporation. The surface of the metal film is covered by a protection layer of non-conductive resin to protect the metal. Namely, in the previous vehicular body structure, the infrared reflection layer of the interior component and the body panel are not electrically connected. On the other hand, in the vehicular body structure 100 of this embodiment, the infrared reflection layer 38 and the roof panel 12 are electrically connected.

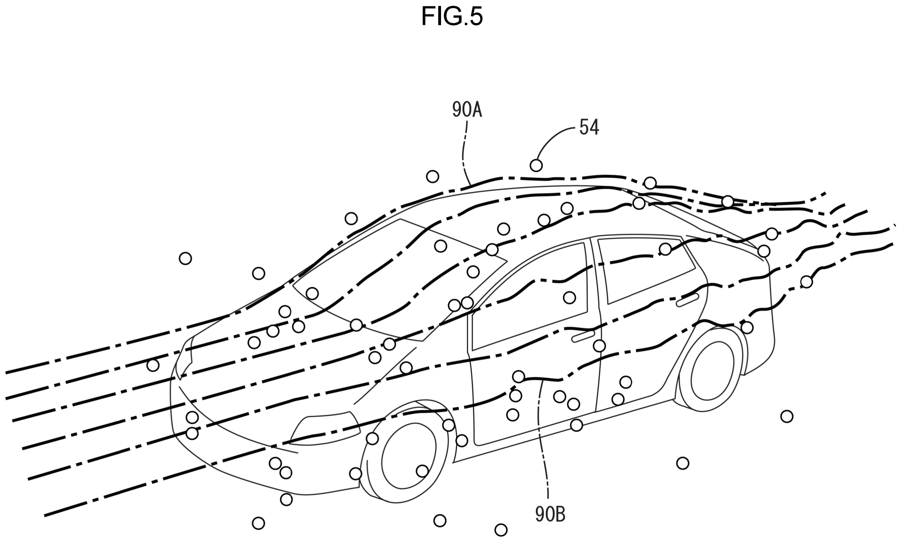

Air flowing around the body of the moving vehicle may be negatively or positively charged. In other words, as illustrated in FIG. 5, a large number of negative or positive electric charges 54 (ions) may be around the moving vehicle. While the vehicle being moving, repulsion is likely to be caused between the surface of the body and the air in portions of the body that are charged with a polarity same as that of the surrounding air. Namely, as illustrated in FIG. 5, in the air flow near the surface of the body, disturbance occurs in sections 90A, 90B and the air flows away from the surface of the body in the sections 90A, 90B. Due to such separation of the air flow during the vehicle's moving, desired characteristics of aerodynamics may not be obtained and driving stability and driving performance may be lowered.

With respect to the vehicular body structure 100 of this embodiment, in the infrared reflection layer 38 of the roof trim 14, two scary metal flakes 40 that are arranged parallel to each other are held to be away from each other with the resin layer 42 made of non-conductive resin as illustrated in FIG. 4. Accordingly, a structure similar to that of a condenser is obtained. Namely, the roof trim 14 exerts a function of temporally storing charges in the infrared reflection layer 38. In the vehicular body structure 100 of this embodiment, the whole infrared reflection layer 38 of the roof trim 14 functions as a condenser.

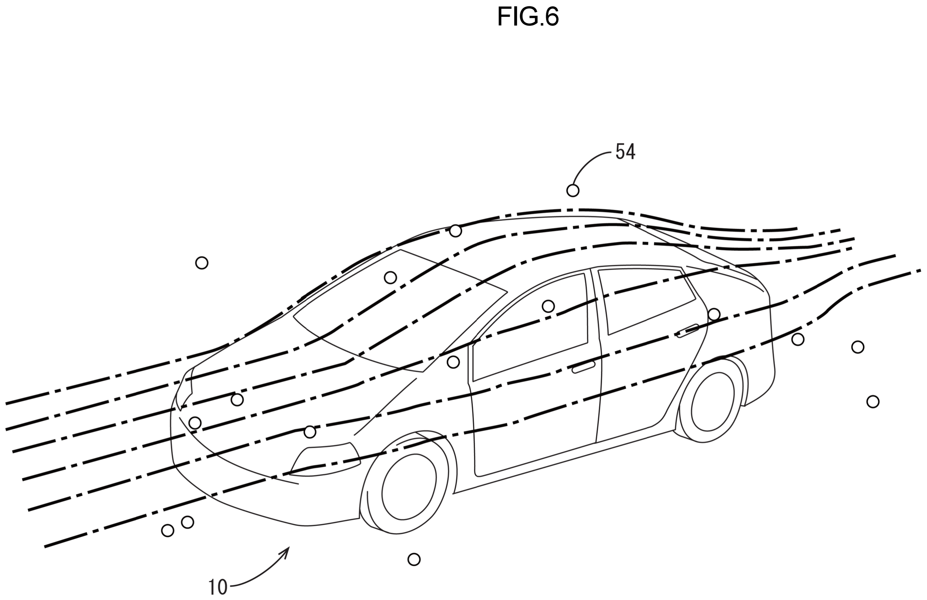

As previously described, in the vehicular body structure 100 of this embodiment, portions of the infrared reflection layer 38 are directly contacted with the roof panel 12. Therefore, the infrared reflection layer 38 can store negative charges or positive charges of the roof panel 12 via the roof panel 12. The stored charges are likely to be concentrated on an edge portion of each scary metal flake 40 and self-discharge (corona discharge) is caused. Minus ions or plus ions created by the self-discharge attract ions of an opposite polarity to cause neutralization. With the vehicular body structure 100 of this embodiment, the roof panel 12 is less likely to be charged and the air flow during the vehicle's moving is stabilized as illustrated in FIG. 6 and driving stability is improved. Fuel efficiency is also improved as will be described in detail later.

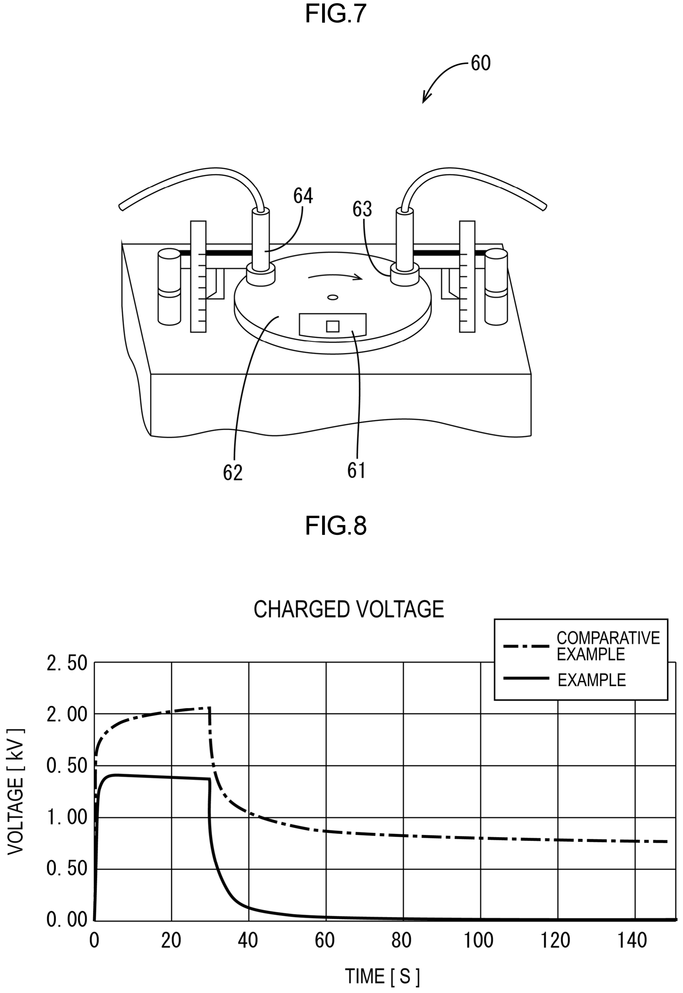

An electrostatic propensity test was performed for the roof trim 14 of the vehicular body structure 100 according to this embodiment. The testing method is the electrostatic propensity test (JIS L1094) of a woven fabric and a knitted fabric and a charged voltage measuring device 60 illustrated in FIG. 7 was used. The charged voltage measuring device 60 includes a turntable 62 on which a test piece 61 is placed and that is rotatable about an axis, a charged electrode 63 for applying a voltage to the turntable 62, and a receiver 64 (a synchroscope) for measuring a charged voltage of the test piece 61. First, the test piece 61 is placed on the turntable 62 of the charged voltage measuring device 60. With rotating the turntable 62, a voltage (voltage to be applied: 7.5kV) is applied to the turntable 62 with the charged electrode 63 for thirty seconds such that the test piece 61 is charged. Then, the application of voltage is stopped and change of the charged voltage of the test piece 61 was measured with the turntable 62 being rotated.

As the test piece 61, an interior component (Example: refer to FIG. 3) having a layered structure same as that of the roof trim 14 of the vehicular body structure 100 of this embodiment and an interior component (Comparative Example) having a layered structure of a previously-used roof trim that does not include an infrared reflection layer are used. The test was performed with the test piece 61 being placed such that a vehicular exterior side surface faces upward. Namely, the test was performed with the test piece of Example having the layered structure same as that of the roof trim 14 being placed such that the infrared reflection layer 38 faces upward. As illustrated in FIG. 8, with respect to the interior component of Comparative Example, a part of the charges was not released and the interior component was in a charged state; however, with respect to the interior component of Example, all the charges are released.

### <Effects of the Vehicular Body Structure>

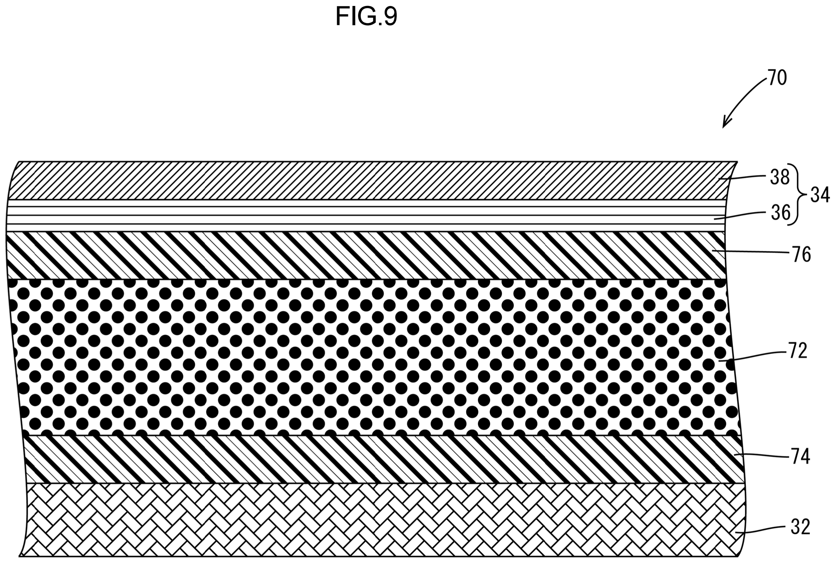

Next, fuel efficiency effects of the vehicle 10 that includes the vehicular body structure 100 of this embodiment were testified with the following method. With vehicles including different ceiling members being driven on a circuit test course under a same condition (speed and acceleration speed) and average fuel consumption was measured. The increase rate of the fuel consumption (fuel consumption improvement rate) of the vehicle or Example with respect to the vehicle of Comparative Example was measured. The vehicle of Comparative Example includes the roof trim having the conventionally-used layered structure that does not include an infrared reflection layer. The vehicle 10 of Example includes the roof trim 14 having the vehicular body structure 100 of this embodiment. The vehicle 10 of Example does not include a sunroof. The fuel consumption improvement rate of each of the vehicle of Comparative Example 1 and the vehicle of Comparative Example 2 with respect to the vehicle of Comparative Example were measured. Each of the vehicle of Comparative Example 1 and the vehicle of Comparative Example 2 includes a roof trim 70 having a layered structure illustrated in FIG. 9. The roof trim 70 will be described.

The roof trim 70 has a structure similar to that of the roof trim 14 of this embodiment. The roof trim 70 includes the skin 32 and the infrared reflection film 34. A base member 72 differs from that of the roof trim 14 that is urethane foam made of thermosetting resin. The base member 72 is mainly made of polypropylene resin (PP resin), which is thermoplastic resin, and is formed from PP resin, glass fibers, and foaming agent that are uniformly mixed. An adhesive layer 74 is between the base member 72 and the skin 32 and an adhesive layer 76 is between the base member 72 and the infrared reflection film 34. The adhesive layers 74, 76 are PP resin. The roof trim 14 of this embodiment is obtained with molding by disposing all the layers on top of each other and pressing the layered object with heating at about 130°C. The roof trim 70 of Comparative Examples 1, 2 is obtained with molding by disposing all the layers on top of each other and pressing the layered object with heating at 200°C and thereafter performing cold pressing (about 20°C).

The vehicle of Comparative Example 1 includes a sunroof and the vehicle of Comparative Example 2 does not include a sunroof similar to the vehicle 10 of Example. The increase rate of the fuel consumption of each of the vehicle of Comparative Example 1 and the vehicle of Comparative Example 2 with respect to the fuel consumption of the vehicle of Comparative Example that includes the roof trim having the conventionally used layered structure was measured.

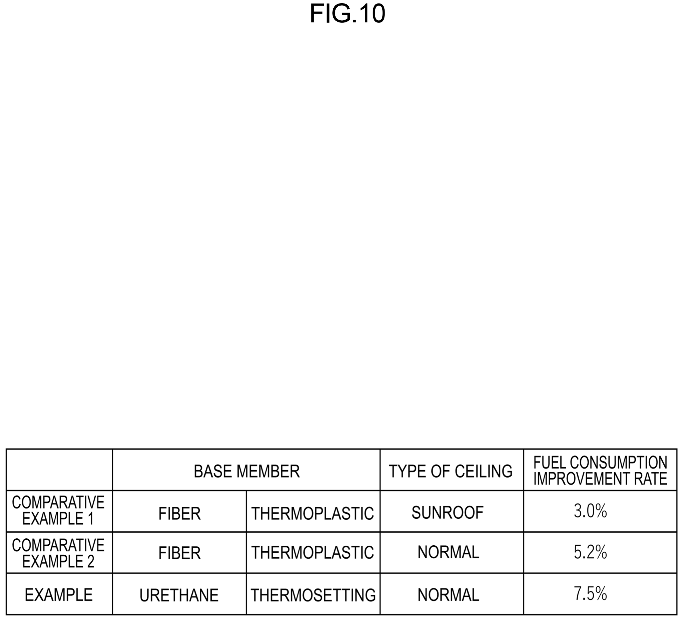

The vehicle 10 of Example and the vehicles of Comparative Example 1 and Comparative Example 2 include the infrared reflection layer 38 in which the scary metal flakes 40 are oriented and that is contacted with the roof panel 12. With such a configuration, as illustrated in FIG. 10, the fuel consumption is improved with respect to the vehicle of Comparative Example that does not include the infrared reflection layer. The fuel consumption improvement rate of the vehicle of Comparative Example 1 that includes the sunroof was 3.0% and the fuel consumption improvement rate of the vehicle of Comparative Example 2 that does not include the sunroof was 5.2%. Namely, it is assumed that as the area of the roof trim is larger, positive charges of the roof panel 12 are decreased and the fuel consumption is improved.

It was found that the fuel consumption improvement rate of the vehicle 10 of Example is 7.5% and is higher than the fuel consumption improvement rate (5.2%) of the vehicle of Comparative Example 2 that does not include a sunroof and includes the base member 72 mainly made of thermoplastic resin. With the base member 72 of the roof trim 70 being made of thermoplastic resin, heating is performed at relatively high temperature and cold pressing is performed in the process of molding. It is assumed that such a molding method is one of reasons of reduction of the condenser function of the infrared reflection layer 38 of the infrared reflection film 34. Therefore, the fuel consumption improvement rate may not be increased.

As described above, in this embodiment, the vehicle 10 includes the vehicular body structure 100 that has the infrared reflecting function and can effectively suppress the influence of electromagnetic noise and or static electricity on the vehicle 10.

As illustrated in FIGS. 1 and 3, the vehicle 10 having the vehicular body structure 100 of this embodiment may include an electric component, which transmits and receives electromagnetic waves, between the roof panel 12 and the roof trim 14. Examples of such an electric component include a motion sensor 80 that detects presence of a passenger. With an electric component such as a motion sensor 80 being mounted and the metal film being deposited on the interior component, electromagnetic waves cannot pass through the interior component and the electric component cannot receive the electromagnetic waves. However, in the vehicular body structure 100 of this embodiment, the scary metal flakes 40 are dispersed in the infrared reflection layer 38. Therefore, the roof trim 14 is configured to transmit electromagnetic waves. For instance, in a portion of the infrared reflection layer 38 that overlaps the electric component, the content of the scary metal flakes 40 can be reduced such that electromagnetic waves can effectively pass through the portion of the infrared reflection layer 38. In the vehicular body structure 100 of this embodiment, as illustrated in FIG. 3, the infrared reflection film 34 includes an infrared reflection layer hole 34A in a portion that overlaps the motion sensor 80. Namely, no infrared reflection film 38 is provided in the portion of the infrared reflection film 34 overlapping the motion sensor 80. According to such a configuration, the motion sensor 80 can surely transmit and receive electromagnetic waves. In the vehicular body structure 100 of this embodiment, the infrared reflection film 34 is formed by disposing the infrared reflection layer 38 on the base film 36 with printing. Therefore, the infrared reflection layer hole 34A can be easily formed in a proper position by defining the printing area.

Furthermore, as illustrated in FIG. 2, in the vehicular body structure 100 of this embodiment, marking 14A such as characters that show line arrangement positions and materials is on a vehicular exterior side surface (a surface having the infrared reflection layer 38) of the roof trim 14. The marking 14A is formed in a recess shape by using a molding die having protrusions in the process of heat press molding. Namely, the portions of the roof trim 14 having the making 14A need to be formed thinner than other portions. Therefore, to form the marking on the roof trim without including the infrared reflection film 34, the base member needs to be recessed and therefore, a relatively deep recess is necessary. Outer edge portions of the roof trim have a reduced thickness. Therefore, with the marking being formed on the outer edge portion, the depth of the marking with respect to the whole thickness of the roof trim is increased. In such a configuration, the design surface may become uneven. In this respect, in the vehicular body structure 100 of this embodiment, even if the recess that is formed in the infrared reflection film 34 is shallower than the recess formed in the base member, the visibility of the marking 14A is high and the marking can be formed in a larger area.

The present technology is not limited to the embodiments described above but may be applied to embodiments that are modified and improved based on the knowledges of those in the art. For example, the vehicular body structure 100 of the above embodiment is applied to a ceiling of the vehicle 10 but may not be necessarily applied to the ceiling. The vehicular body structure 100 may be applied to a structure of a side wall portion such as a vehicular pillar or a side door. In the above embodiment, the roof panel 12, which is a body panel, is made of metal but is not be limited thereto and may be a panel member made of resin, carbon, and glass.

### EXPLANATION OF SYMBOLS

10...vehicle, 12...roof panel [body panel], 14...roof trim [interior component], 30...base member, 32...skin [skin layer], 34...infrared reflection film, 34A...infrared reflection layer hole, 36...base film, 38...infrared reflection layer, 40... scary metal flake [scaly metal piece], 42... non-conductive resin, 50, 52...adhesive layer, 80...motion sensor [electric component], 100... vehicular body structure

## Claims

1. A vehicular body structure comprising:
a body panel; and
an interior component disposed to cover a vehicular interior side of the body panel, the interior component including
a base member made of thermosetting resin material,
a skin layer disposed on the vehicular interior side of the base member and configured as a design surface of a vehicular compartment, and
an infrared reflection layer disposed on a vehicular exterior side of the base member to be opposite the body panel, the infrared reflection layer being for reflecting infrared radiation entering from a body panel side, wherein
the base member, the skin layer, and the infrared reflection layer are disposed on top of each other in layers,
the infrared reflection layer includes scary metal pieces that are electrically conductive and non-conductive resin that holds the scary metal pieces to be parallel to each other and to be overlapped in a thickness direction, and
the interior component is mounted on the body panel with a portion of the infrared reflection layer being in contact with the body panel.

2. The vehicular body structure according to claim 1, wherein
the interior component includes an infrared reflection film including a base film and the infrared reflection layer that is formed by disposing coating material including the scary metal pieces and the non-electrically conductive resin on the base film, and
the infrared reflection film is bonded to a vehicular exterior side surface of the base member.

3. The vehicular body structure according to claim 2, wherein the infrared reflection film is bonded to the base member with thermosetting resin adhesive.

4. The vehicular body structure according to claim 3, wherein the interior component includes an adhesive layer between the base member and the infrared reflection film, and the adhesive layer includes the thermosetting resin adhesive and glass fibers that are mixed.

5. The vehicular body structure according to claim 4, wherein the interior component includes an adhesive layer between the base member and the skin layer, and the adhesive layer includes the thermosetting resin adhesive and glass fibers that are mixed.

6. The vehicular body structure according to any one of claims 1 to 5, further comprising an electric component that is disposed between the body panel and the interior component and configured to transmit or receive electromagnetic waves, wherein
the interior component includes an infrared reflection layer hole in a portion overlapping the electric component in a vehicular interior-exterior direction, and
the infrared reflection layer is not formed in the infrared reflection layer hole.

7. The vehicular body structure according to any one of claims 1 to 5, wherein the base member is made of thermosetting resin material.

8. The vehicular body structure according to any one of claims 1 to 5, wherein the body panel is a roof panel and the interior component is a ceiling member.

9. The vehicular body structure according to claim 7, wherein the base member is urethane foam.
